(19) Europäisches Patentamt / European Patent Office / Office européen des brevets

(11) **EP 3 435 018 B1**

(12) **FASCICULE DE BREVET EUROPEEN**

(45) Date de publication et mention
de la délivrance du brevet:
**18.08.2021 Bulletin 2021/33**

(51) Int Cl.:
***F28D 20/00*** *(2006.01)*

(21) Numéro de dépôt: **18184615.5**

(22) Date de dépôt: **20.07.2018**

(54) **DISPOSITIF DE STOCKAGE D'ÉNERGIE THERMIQUE COMPORTANT UN RÉSERVOIR INTERNE ET UN SYSTÈME DE DISTRIBUTION DE FLUIDE CALOPORTEUR**

WÄRMEENERGIE-SPEICHERVORRICHTUNG, DIE EINEN INTERNEN TANK UND EIN VERTEILUNGSSYSTEM EINES WÄRMEÜBERTRAGUNGSMITTELS UMFASST

DEVICE FOR STORING THERMAL ENERGY HAVING AN INTERNAL TANK AND A COOLANT DISTRIBUTION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2017 FR 1757169**

(43) Date de publication de la demande:
**30.01.2019 Bulletin 2019/05**

(73) Titulaire: **Commissariat à l'énergie atomique et aux énergies alternatives 75015 Paris (FR)**

(72) Inventeurs:
• **ESENCE, Thibaut**
**38000 GRENOBLE (FR)**
• **COUTURIER, Raphael**
**38360 SASSENAGE (FR)**
• **VESIN, Sébastien**
**38054 GRENOBLE CEDEX (FR)**

(74) Mandataire: **Brevalex**
**95, rue d'Amsterdam**
**75378 Paris Cedex 8 (FR)**

(56) Documents cités:
WO-A1-2004/010057    US-A- 4 522 254
US-A1- 2002 050 478    US-B2- 8 261 774

**Description**

**DOMAINE TECHNIQUE**

La présente invention se rapporte au domaine général du stockage d'énergie thermique, notamment par chaleur sensible, en particulier à des fins de stockage domestique et/ou de stockage pour un réseau de chaleur. Elle concerne plus spécifiquement le domaine des systèmes d'injection et/ou de soutirage d'un fluide caloporteur au sein d'un dispositif de stockage d'énergie thermique, notamment à l'intérieur d'un volume de stockage thermiquement stratifié.

L'invention propose ainsi un dispositif de stockage d'énergie thermique comportant un réservoir interne de stockage et un système de distribution de fluide caloporteur dans le réservoir interne de stockage, ainsi qu'un procédé associé de distribution de fluide caloporteur.

**ÉTAT DE LA TECHNIQUE ANTÉRIEURE**

Actuellement, les besoins en énergie thermique sont certains, et notamment pour son utilisation à des fins de chauffage et de production d'eau chaude sanitaire (ECS). Le stockage d'énergie thermique par chaleur sensible peut ainsi se faire avec apport de plusieurs contributions énergétiques telles que solaire, biomasse, entre autres.

Toutefois, de tels besoins en énergie thermique varient considérablement au cours d'une même journée. En effet, des pics de consommation en énergie thermique sont observés au cours de la journée. Ainsi, dans le cadre de l'utilisation de l'énergie thermique pour des besoins en chauffage par exemple, ces pics de consommation peuvent atteindre jusqu'à quatre fois la charge moyenne d'un réseau de chaleur, et les pics de consommation du matin et du soir, cumulés ensemble, peuvent représenter à eux seuls près de 30 % de la consommation journalière en énergie thermique. De la même façon, sur une année complète, les besoins en énergie thermique sont également variables puisque notamment les besoins en chauffage sont pratiquement nuls pendant l'été alors qu'ils peuvent atteindre des valeurs très élevées pendant l'hiver.

Pour pouvoir répondre à la demande en énergie thermique, l'alimentation en énergie thermique est assurée par des unités de production qui rencontrent des difficultés à se conformer à cette demande fluctuante, étant en effet généralement soit prévues pour être intermittentes, par exemple dans le cas de panneaux solaires thermiques, soit conçues pour fonctionner avec des régimes de fonctionnement stables et réguliers, telles que par exemple les centrales à bois.

Par conséquent, l'utilisation du stockage d'énergie thermique, en particulier par chaleur sensible, apparaît comme une solution adaptée pour permettre de concilier à la fois la demande fluctuante en énergie thermique et les contraintes de production d'énergie thermique, en absorbant ainsi par « effet tampon » les fluctuations propres à la demande et à la production.

Dans le stockage thermique par chaleur sensible, l'énergie est stockée sous la forme d'une élévation de température du matériau de stockage. La quantité d'énergie stockée est alors directement proportionnelle au volume, à l'élévation de température et à la capacité thermique du matériau de stockage. Ce type de stockage n'est limité que par la différence de température disponible et celle supportée par le matériau ou son conteneur, par les déperditions thermiques du stockage et par l'éventuel changement d'état que peut être amené à subir le matériau servant au stockage.

Un dispositif de stockage d'énergie thermique peut fonctionner en régime journalier, les charges et décharges se réalisant alors à l'échelle d'une journée avec typiquement une charge durant la journée et une décharge lorsqu'un besoin énergétique est demandé, notamment le soir et le matin, voire également en régime inter saisonnier, les charges et décharges se réalisant alors à l'échelle d'une année avec typiquement une charge durant le printemps et l'été et une décharge durant l'automne et l'hiver.

En outre, un dispositif de stockage d'énergie thermique peut être conçu selon différentes tailles en fonction de son usage. En particulier, le volume de fluide caloporteur stocké peut être variable. Par exemple, le stockage domestique, par exemple pour un ballon d'ECS domestique ou un chauffe-eau solaire individuel, peut nécessiter un volume de fluide caloporteur de quelques centaines de litres à quelques mètres cubes. En revanche, le stockage urbain pour un réseau de chaleur peut lui nécessiter un volume de fluide caloporteur bien plus important, et en particulier de quelques centaines de mètres cubes à plusieurs dizaines de milliers de mètres cubes.

Toutefois, quelle que soit la finalité envisagée du stockage thermique, il existe une problématique forte qui conditionne les performances du stockage thermique et qui consiste en la préservation de la stratification thermique au sein du réservoir du dispositif de stockage thermique, contenant le fluide caloporteur.

En effet, pour obtenir un stockage thermique de qualité, il est nécessaire d'obtenir un fort gradient de température entre les deux extrémités du stockage, notamment entre le haut et le bas du dispositif de stockage thermique considéré en position verticale.

Aussi, afin de préserver la qualité de stockage et donc ce gradient thermique, il faut pouvoir distribuer, à savoir injecter et/ou soutirer, le fluide caloporteur sans pour autant induire de mouvements convectifs responsables alors de la déstratification thermique. De plus, les températures d'injection n'étant pas constantes, il faut également pouvoir être capable d'injecter le fluide à une température donnée au sein d'une strate de température adéquate pour éviter un mélange du fluide stocké dans le réservoir du dispositif de stockage. De la même façon, en cas de soutirage, il faut pouvoir soutirer à partir de n'importe quelle strate de température en fonction du besoin en température demandé.

Dans le processus de charge ou de décharge d'un réservoir thermique d'un dispositif de stockage thermique, les fonctions de distribution et de diffusion de fluide caloporteur peuvent être distinguées l'une de l'autre. En effet, d'une part la fonction de distribution de fluide caloporteur consiste en tant que telle à distribuer le fluide caloporteur à un certain niveau, ou une certaine hauteur, du stockage du réservoir, tandis que d'autre part la fonction de diffusion de fluide caloporteur vise à limiter l'impact de l'injection/soutirage de fluide caloporteur dans la strate de stockage où a lieu la distribution (mélange, turbulences, effet de jet).

Par ailleurs, il est à noter que la distribution d'énergie thermique dans le réservoir du dispositif de stockage peut être réalisée de façon directe, c'est-à-dire que le fluide de stockage du réservoir et le fluide injecté/soutiré sont identiques, ou encore de façon indirecte, par le biais de la présence d'un échangeur de chaleur équipant le dispositif de stockage. La solution indirecte permet d'éviter la problématique de diffusion qui peut engendrer une déstratification du réservoir thermique par effet de jet. Toutefois, elle induit généralement une perte exergétique due à l'échange même de chaleur entre les deux fluides distincts.

Ainsi, considérant les fonctions de distribution et de diffusion décrites précédemment pour un réservoir thermique d'un dispositif de stockage thermique, des solutions sont déjà connues dans l'art antérieur.

En ce qui concerne tout d'abord la distribution de fluide caloporteur, plusieurs types de distributeurs sont connus.

Il existe ainsi notamment le principe de l'injection fixe, consistant à injecter le fluide chaud en partie haute du réservoir de stockage par le biais d'une canalisation fixe et à soutirer le fluide froid en partie basse du réservoir. Un tel système d'injection est simple de mise en œuvre et de conception, et s'avère intéressant lorsque les températures d'entrée sont constantes et que le débit est faible. Toutefois, il engendre une stratification de mauvaise qualité dans le cas de conditions d'entrée et de sortie du fluide complexes, telles que la présence d'une température variable ou un débit élevé.

Par ailleurs, on connaît également le principe de l'injection multi-niveaux active, notamment par vanne trois voies. Ce type d'injection est le plus répandu, et consiste en l'introduction du fluide caloporteur à une altitude dépendant de la température du fluide injecté et de l'état thermique du réservoir, notamment selon trois niveaux de température différents. Dans ce cas, les vannes trois voies fonctionnent en tout ou rien et sont régulées par la température de sortie du fluide. Elles sont utilisées pour orienter le fluide vers différents points d'entrée disposés à une altitude prédéterminée. La mise en place d'une pluralité de vannes trois voies permet d'augmenter le nombre de strates d'injection dans le réservoir thermique. Cette technologie multi-niveaux permet d'obtenir au moins deux strates différentes de température dans le réservoir thermique, et elle est également robuste et fiable. Toutefois, son coût s'avère non négligeable et le fonctionnement en tout ou rien des vannes trois voies limite la régulation.

L'injection multi-niveaux active peut être réalisée grâce à des systèmes plus complexes, tels que celui décrit dans la demande de brevet français FR 3 026 385 A1. Il s'agit d'une canne d'injection qui permet d'ajuster l'altitude à laquelle le fluide caloporteur est injecté par conjonction de deux ouvertures, l'une sur une canne fixe, l'autre sur une canne rotative. C'est un système actif qui nécessite un actionneur et une méthode de régulation permettant de choisir l'altitude à laquelle le fluide caloporteur est injecté.

L'injection multi-niveaux passive est possible grâce à des systèmes s'ajustant d'eux-mêmes en fonction de la température du fluide caloporteur. C'est le cas du système présenté dans la demande internationale WO 2016/146724 A1. Il s'agit d'une canne télescopique dont la longueur varie par flottaison du fait des différences de masse volumique entre les fluides chaud et froid. La masse volumique du solide constituant la canne est choisie de manière à ce qu'elle ait une influence négligeable par rapport au fluide à l'intérieur de la canne. Ainsi, la canne télescopique « flotte » dans la strate du réservoir correspondant à la masse volumique du fluide dont elle est remplie. Le fluide est donc naturellement injecté dans la strate thermique correspondant à son niveau de température. Cette technologie nécessite d'adapter finement la masse volumique du solide et son efficacité peut être affectée lorsque les différences de température, et donc de masse volumique, sont faibles dans le stockage. De plus, les parties mobiles sont susceptibles de se coincer en raison d'un possible encrassement, des dilatations thermiques des matériaux, entre autres.

D'autres technologies d'injection multi-niveaux passives sont en voie de développement comme celles relatives à l'utilisation des manifolds (tubes poreux), prometteuses pour favoriser l'élaboration d'une stratification mais utilisant des matériaux plutôt adaptés à du stockage à faible échelle. Ce sont des matériaux pouvant se contracter ou se dilater selon les conditions, donnant ainsi la possibilité de libérer le fluide au bon niveau de pression. Ils donnent ainsi la possibilité de libérer le fluide caloporteur au bon niveau de pression. Les tests montrent que les manifolds rigides poreux offrent de meilleures performances que les entrées fixes traditionnelles, mais sont rarement utilisés faute de s'adapter à des conditions d'utilisation différentes. Des alternatives sont possibles, notamment avec les manifolds en tissu. L'inconvénient de ces matériaux vient de leur faible épaisseur qui engendre de forts transferts thermiques à travers la paroi.

Il existe également le principe d'injection dit de la « canne de stratification » qui permet la distribution d'énergie par convection naturelle. Plus précisément, le fluide remonte à l'intérieur d'un tube thermosiphon (canne de stratification) percé de trous pour l'injection de fluide dans le réservoir. Le principe physique est similaire à celui de la canne télescopique présentée précédemment, sauf qu'il n'y a aucune partie mobile dans le distributeur : le fluide atteint lui-même la strate thermique adaptée. Par différence de masse volumique, le fluide circule dans la canne de stratification jusqu'à atteindre la hauteur de la strate de même température. Ce principe de fonctionnement permet donc l'établissement de strates tout au long du réservoir de stockage, donnant lieu à une large zone de gradient thermique ou thermocline, mais à peu de brassage. Ce principe est également plus difficile à mettre en place. Par ailleurs, des installations peuvent être mises en place pour stopper la remontée de fluide dans la canne de stratification, telles que par exemple des clapets anti-retour ou des tubes inclinés. L'injection peut être réalisée de façon indirecte par le biais de l'utilisation d'un échangeur de chaleur.

En ce qui concerne par ailleurs la fonction de diffusion de fluide caloporteur, et dans le cas de distributeurs à injection directe (donc sans échangeur de chaleur), il peut être intéressant de rajouter des diffuseurs ou brise-jets ayant pour fonction d'atténuer le phénomène de jet qui peut engendrer une dégradation de la stratification. Ainsi, diverses études ont été menées autour de cette problématique révélant que, d'une part pour les diffuseurs, il est possible de diminuer l'énergie cinétique et de permettre une bonne répartition du fluide caloporteur bien que ceux-ci ne permettent pas à eux seuls de régler le problème de la mise en place de la stratification et de son maintien, tandis que, d'autre part pour les brise-jets, il est possible de diminuer l'énergie cinétique bien que ceux-ci peuvent entraîner le brassage du fluide caloporteur injecté.

En outre, diverses autres solutions de conception de distributeurs, utilisant notamment le principe des cannes de stratification, et de diffuseurs de fluide dans un réservoir de stockage ont également été décrites dans la littérature brevet. A titres d'exemples, on peut ainsi citer la demande de brevet européen EP 2 065 666 A1 qui décrit la présence d'un serpentin confiné médian au stockage avec deux canes de distribution reliées à l'espace confiné, la demande de brevet coréen KR 2005-0064018 A qui décrit la réalisation d'un diffuseur avec une partie mobile permettant de modifier la section de passage du diffuseur, ou encore la demande internationale WO 2013/083911 A1 qui décrit un concept de brise-jet disposé à l'entrée d'eau dans un réservoir de stockage d'eau chaude.

Document US 8 261 774 B2 divulgue un dispositif de stockage d'énergie thermique comme dans le préambule de la revendication 1.

Par ailleurs, il existe également une autre solution de conception de distributeur telle que décrit dans l'article « Selection of permeability for optimum performance of a porous tube thermal stratification manifold », S. Wang, J.H. Davidson, Solar Energy, Volume 122, décembre 2015, pages 472-485.

L'article décrit une étude portant sur les cannes poreuses utilisées comme distributeur/diffuseur dans les systèmes de stockage thermique stratifiés alimentés par une source de chaleur de température variable. La différence de masse volumique entre les fluides chaud et froid permet d'injecter le fluide dans la strate thermique correspondant à sa température de manière passive.

Dans cette étude, il est démontré que le système est régi par deux paramètres adimensionnels principaux, à savoir: le nombre adimensionnel de Richardson (Ri) et la perméabilité adimensionnelle du système d'injection (K*).

Le nombre adimensionnel de Richardson permet de comparer l'énergie potentielle gravitationnelle (liée à la force d'Archimède) à l'énergie cinétique (liée à la vitesse) d'un fluide. Afin que l'injection du fluide soit essentiellement régie par la force d'Archimède liée aux différences de masse volumique des fluides chaud et froid, le nombre de Richardson doit être supérieur à 100. Le nombre de Richardson s'écrit selon l'équation (1) :

$$Ri = \frac{g \cdot L \cdot \beta_{in} \cdot \Delta T}{u_{in}^2} = \frac{g \cdot L \cdot \beta_{in} \cdot \Delta T \cdot \rho_{in}^2 \cdot S_{in}^2}{\dot{m}_{in}^2}$$

avec g (m·s$^{-2}$) représentant l'accélération de la pesanteur, *L* (m) représentant la longueur caractéristique, $\beta_{in}$ (K$^{-1}$) représentant le coefficient d'expansion thermique du fluide en entrée, $\Delta T$ (K) représentant l'écart de température au sein du système, $u_{in}$ (m·s$^{-1}$) représentant la vitesse du fluide en entrée, $\rho_{in}$ (kg·m$^{-3}$) représentant la masse volumique du fluide en entrée, $S_{in}$ (m$^2$) représentant la section de passage du fluide en entrée et $\dot{m}_{in}$ (kg·s$^{-1}$) représentant le débit massique du fluide en entrée.

La perméabilité adimensionnelle du distributeur permet de comparer la perte de charge subie par le fluide traversant le milieu poreux à la perte de charge axiale dans le distributeur. La perméabilité adimensionnelle possède une valeur optimale selon le régime de fonctionnement souhaité. Si la perméabilité adimensionnelle est trop élevée, le diffuseur s'oppose peu à l'écoulement du fluide et le système présente peu d'intérêt par rapport à une injection simple par le haut puisque les turbulences et les recirculations sont peu atténuées par le milieu poreux. À l'inverse, si la perméabilité adimensionnelle est trop faible, le fluide peine à traverser le milieu poreux. Une pression supérieure dans la canne est alors nécessaire pour forcer l'écoulement, ce qui conduit à une distribution indifférenciée sur toute la hauteur du réservoir. La perméabilité adimensionnelle pour une canne d'injection tubulaire s'écrit selon l'équation (2) :

$$K_{tube}^* = \frac{8 \cdot K \cdot L_c \cdot \dot{m}_{in}}{\pi \cdot \mu \cdot \delta \cdot e^3}$$

avec $K$ (m$^2$) représentant la perméabilité propre du matériau poreux, $L_c$ (m) représentant la longueur de la canne d'injection, $\mu$ (Pa·s) représentant la viscosité dynamique du fluide, 6 (m) représentant l'épaisseur du milieu poreux, et e (m) représentant le rayon interne de la canne d'injection.

Une analyse de cette dernière équation permet de montrer qu'elle est homogène, selon l'équation (3), à :

$$K_{tube}^* = \frac{\Delta P_{tube}}{\Delta P_{poreux}} \cdot \left( \frac{\rho_{in} \cdot u_{sup,poreux} \cdot D_{H,tube}/2}{\mu} \right)$$

avec $\Delta P_{tube}$ (Pa) représentant la perte de charge subie par le fluide circulant dans la canne estimée en supposant un écoulement de Poiseuille, $\Delta P_{poreux}$ (Pa) représentant la perte de charge subie par le fluide traversant le milieu poreux estimée à l'aide de la loi de Darcy, $u_{sup,poreux}$ (m·s$^{-1}$) représentant la vitesse superficielle moyenne du fluide traversant le milieu poreux et $D_{H,tube}$ (m) représentant le diamètre hydraulique de la canne (soit le diamètre intérieur).

En fonction de la configuration la plus fréquente (charge à température nominale ou charge à température intermédiaire), l'étude mentionnée préconise une perméabilité adimensionnelle du distributeur comprise entre 0,02 et 0,2.

## EXPOSÉ DE L'INVENTION

Il existe un besoin pour proposer une solution alternative améliorée de système de distribution de fluide caloporteur pour un dispositif de stockage d'énergie thermique, notamment par chaleur sensible, comportant un réservoir de stockage de fluide caloporteur thermiquement stratifié, afin de réaliser des charges et/ou décharges de fluide caloporteur tout en empêchant, ou du moins en limitant fortement, la déstratification thermique au sein du réservoir de stockage.

Il existe en particulier un besoin pour améliorer l'efficacité énergétique du stockage grâce à un système de distribution passif du fluide caloporteur ayant un minimum d'impact sur la stratification thermique établie dans le volume de stockage, ce système assurant l'injection du fluide dans la strate thermique adéquate du volume de stockage grâce aux différences de densité selon le principe de la force d'Archimède.

L'invention a pour but de remédier au moins partiellement aux besoins mentionnés précédemment et aux inconvénients relatifs aux réalisations de l'art antérieur.

L'invention a ainsi pour objet, selon l'un de ses aspects, un dispositif de stockage d'énergie thermique, caractérisé en ce qu'il comporte :

- un premier réservoir interne de stockage thermique stratifié comportant un fluide caloporteur pour le stockage d'énergie thermique, et comportant au moins un conduit de distribution de fluide caloporteur, et
- un système de distribution de fluide caloporteur pour l'injection et/ou le soutirage de fluide caloporteur, comportant :

  - un deuxième réservoir externe de distribution de fluide caloporteur dans lequel est contenu au moins en partie le premier réservoir interne de stockage thermique, comportant au moins un conduit de distribution de fluide caloporteur, et
  - au moins une interface poreuse formée dans une partie de la paroi du premier réservoir interne de stockage thermique contenue dans le deuxième réservoir externe de distribution de fluide caloporteur, une communication fluidique étant ainsi réalisée entre le premier réservoir interne de stockage thermique et le deuxième réservoir externe de distribution de fluide caloporteur par le biais de ladite au moins une interface poreuse de sorte à permettre la distribution de fluide caloporteur, et en ce que le premier réservoir interne de stockage thermique comporte un premier conduit de distribution de fluide caloporteur dans sa partie supérieure et un deuxième conduit de distribution de fluide caloporteur dans sa partie inférieure.

Par « réservoir de stockage thermique stratifié », on entend que le volume de fluide caloporteur contenu dans le réservoir de stockage thermique présente un gradient de température entre les deux extrémités du stockage. Autrement dit, le volume de fluide caloporteur du réservoir de stockage thermique peut être divisé en une multitude de couches thermiques superposées de fluide caloporteur présentant des températures différentes et graduelles depuis l'une des extrémités de stockage vers l'autre des extrémités de stockage, ces couches superposées formant ainsi des strates thermiques successives.

Grâce à l'invention, il peut être possible de distribuer le fluide caloporteur durant des phases de charge et/ou de décharge du réservoir de stockage thermique du dispositif de stockage d'énergie thermique tout en empêchant, ou du moins en minimisant, la perturbation de la stratification thermique au sein du réservoir pendant ces opérations.

Le dispositif de stockage d'énergie thermique selon l'invention peut en outre comporter l'une ou plusieurs des caractéristiques suivantes prises isolément ou suivant toutes combinaisons techniques possibles.

Le fluide caloporteur destiné à être distribué peut être de tout type, étant typiquement de l'eau.

De façon avantageuse, le système de distribution selon l'invention est un système de distribution à injection directe, le fluide caloporteur du réservoir de stockage thermique étant identique au fluide caloporteur injecté et/ou soutiré par le biais du système de distribution.

De façon préférentielle, le premier réservoir interne de stockage thermique peut comporter une paroi latérale, une paroi supérieure et une paroi inférieure, ladite au moins une interface poreuse étant formée dans la paroi latérale, dans une partie contenue dans le deuxième réservoir externe de distribution de fluide caloporteur, les parois supérieure et inférieure étant notamment dépourvues de toute interface poreuse.

Avantageusement, le premier réservoir interne de stockage thermique et le deuxième réservoir externe de distribution de fluide caloporteur peuvent présenter une forme cylindrique, ladite au moins une interface poreuse ayant notamment une forme annulaire continue tout autour du premier réservoir interne de stockage thermique.

Selon une première variante, le premier réservoir interne de stockage thermique peut être intégralement contenu dans le deuxième réservoir externe de distribution de fluide caloporteur de sorte à définir des réservoirs gigognes, l'espace séparant les parois des réservoirs définissant notamment une couronne de distribution de fluide caloporteur.

Alors, le deuxième réservoir externe de distribution de fluide caloporteur peut comporter un premier conduit de distribution de fluide caloporteur dans sa partie supérieure et un deuxième conduit de distribution de fluide caloporteur dans sa partie inférieure.

Selon une deuxième variante, le premier réservoir interne de stockage thermique peut être en partie contenu dans le deuxième réservoir externe de distribution de fluide caloporteur, l'espace séparant la paroi de la partie du premier réservoir interne de stockage thermique contenue dans le deuxième réservoir externe de distribution de fluide caloporteur de la paroi du deuxième réservoir externe de distribution de fluide caloporteur définissant notamment une couronne de distribution de fluide caloporteur.

Alors, le deuxième réservoir externe de distribution de fluide caloporteur peut comporter un unique conduit de distribution de fluide caloporteur dans sa partie supérieure.

La paroi supérieure et/ou la paroi inférieure du premier réservoir peuvent être réalisées en métal avec un isolant thermique et/ou en plastique isolant thermiquement.

Ladite au moins une interface poreuse peut notamment comporter un lit de billes, par exemple réalisées en plastique, et en particulier empaquetées dans un treillis, notamment à la manière de gabions.

Le système de distribution de fluide caloporteur peut, le cas échéant, comporter une pluralité d'interfaces poreuses, espacées les unes des autres sur tout le pourtour de la paroi du premier réservoir interne de stockage thermique, définissant ainsi des fenêtres alternativement poreuses et non poreuses.

De façon préférentielle, le dispositif de stockage d'énergie thermique est un dispositif de stockage d'énergie thermique par chaleur sensible.

Par ailleurs, l'invention a également pour objet, selon un autre de ses aspects, un procédé de distribution de fluide caloporteur, caractérisé en ce qu'il est mis en œuvre au moyen d'un dispositif de stockage d'énergie thermique tel que défini précédemment, et en ce qu'il comporte l'étape consistant à injecter un fluide caloporteur dans une strate thermique du premier réservoir interne de stockage thermique de même température que le fluide caloporteur par le biais du système de distribution, notamment par le biais de ladite au moins une interface poreuse formant un élément diffuseur de fluide caloporteur et/ou l'étape consistant à soutirer directement un fluide caloporteur depuis le premier réservoir interne de stockage thermique sans utilisation du système de distribution, notamment de ladite au moins une interface poreuse.

Le dispositif de stockage d'énergie thermique et le procédé de distribution selon l'invention peuvent comporter l'une quelconque des caractéristiques énoncées dans la description, prises isolément ou selon toutes combinaisons techniquement possibles avec d'autres caractéristiques.

## BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :

- la figure 1 représente, selon une vue partielle en coupe, un premier exemple de dispositif de stockage d'énergie thermique conforme à l'invention,

- la figure 2 illustre le fonctionnement du dispositif de stockage d'énergie thermique de la figure 1 dans un mode de charge ou d'injection,
- la figure 3 illustre le fonctionnement du dispositif de stockage d'énergie thermique de la figure 1 dans un mode de décharge ou de soutirage,
- la figure 4 illustre le fonctionnement du dispositif de stockage d'énergie thermique de la figure 1 dans un mode de charge, ou d'injection, et de décharge, ou de soutirage, simultanées,
- la figure 5 illustre le fonctionnement du dispositif de stockage d'énergie thermique de la figure 1 dans un mode de charge, ou d'injection, nominale forcée,
- la figure 6 illustre le fonctionnement du dispositif de stockage d'énergie thermique de la figure 1 dans un mode de décharge, ou de soutirage, nominale forcée,
- la figure 7 illustre, sous forme graphique, le gain réalisé en passant d'un distributeur poreux de forme tubulaire à un distributeur poreux de forme annulaire conforme à l'invention de même dimension caractéristique $\eta$, et
- la figure 8 représente, selon une vue partielle en coupe, un deuxième exemple de dispositif de stockage d'énergie thermique conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

Il est à noter que dans tous les exemples de réalisation décrits ci-après, le système de distribution 10 de fluide caloporteur du dispositif de stockage d'énergie thermique 50 selon l'invention peut permettre d'assurer à la fois la fonction d'injection de fluide caloporteur dans le stockage, soit de l'extérieur vers l'intérieur du stockage, mais également la fonction de soutirage ou prélèvement de fluide caloporteur depuis le stockage, soit de l'intérieur vers l'extérieur du stockage.

En termes d'injection de fluide caloporteur dans le stockage, l'invention vise à permettre une injection du fluide caloporteur de température donnée au sein d'une strate thermique cible de même température. En outre, en termes de soutirage de fluide caloporteur depuis le stockage, l'invention vise à permettre le prélèvement à la température la plus chaude tout en conservant la strate thermique dans le stockage.

Par ailleurs, dans tous les exemples décrits ci-après, on considère que le fluide caloporteur correspond à de l'eau, et que le stockage d'énergie thermique correspond à du stockage d'énergie thermique par chaleur sensible.

De plus, les termes éventuels « supérieur » et « inférieur » sont à comprendre ici selon le sens d'orientation normal d'un dispositif de stockage d'énergie thermique 50 lorsque dans sa configuration d'utilisation.

Enfin, sur les figures, la flèche G représente le gradient des températures dans le volume de stockage allant du plus chaud C au plus froid F.

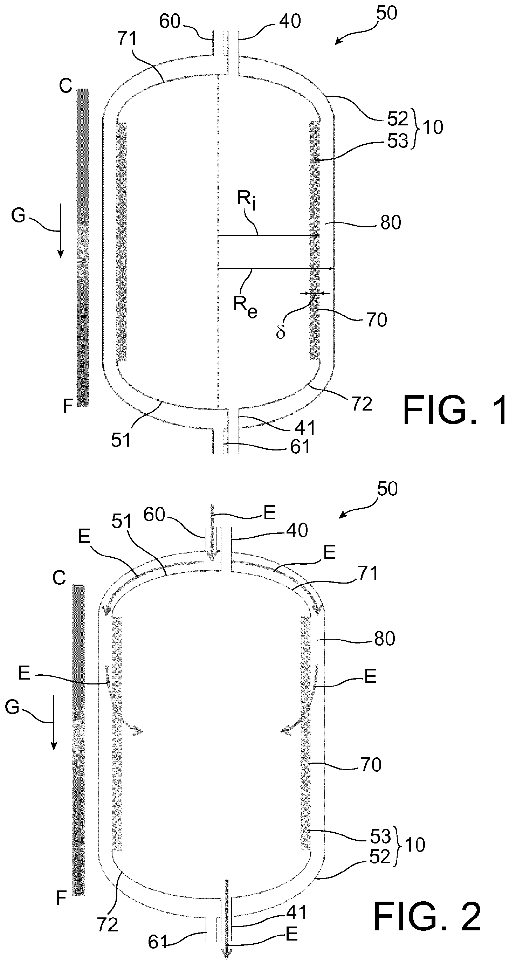

On va tout d'abord décrire, en référence aux figures 1 à 7, un premier exemple de dispositif de stockage d'énergie thermique 50 conforme à l'invention.

Comme on peut le voir sur la figure 1, le dispositif de stockage d'énergie thermique 50 comporte un premier réservoir interne de stockage thermique 51 stratifié comportant un fluide caloporteur pour le stockage d'énergie thermique.

Ce premier réservoir 51 se présente sous une forme cylindrique, et comporte une paroi latérale annulaire 70, une paroi supérieure 71 et une paroi inférieure 72.

De plus, ce premier réservoir 51 comporte un premier conduit de distribution 40 de fluide caloporteur dans sa partie supérieure, débouchant dans le volume interne du réservoir 51 par le biais de la paroi supérieure 71, et un deuxième conduit de distribution 41 de fluide caloporteur dans sa partie inférieure, débouchant dans le volume interne du réservoir 51 par le biais de la paroi inférieure 72.

Les paroi supérieure 71 et inférieure 72 définissent ainsi des dômes déflecteurs isolants pour le premier réservoir 51.

Par ailleurs, le dispositif de stockage d'énergie thermique 50 comporte un système de distribution 10 de fluide caloporteur pour l'injection et/ou le soutirage de fluide caloporteur.

Ce système de distribution 10 est formé par un deuxième réservoir externe de distribution de fluide caloporteur 52, également de forme cylindrique, dans lequel est contenu le premier réservoir interne de stockage thermique 51, et par la présence d'une interface poreuse 53 formée dans la paroi du premier réservoir 51.

L'interface poreuse 53 permet ainsi d'établir une communication fluidique entre le premier réservoir 51 et le deuxième réservoir 52 de sorte à permettre la distribution de fluide caloporteur.

Plus précisément, le deuxième réservoir 52 est de volume supérieur à celui du premier réservoir 51 de sorte que le premier réservoir 51 est complètement englobé par le deuxième réservoir 52. Les premier 51 et deuxième 52 réservoirs forment ainsi des réservoirs gigognes.

Autrement dit, les premier 51 et deuxième 52 réservoirs permettent ainsi de définir un espace séparant les parois des réservoirs 51, 52 qui définit une couronne de distribution 80 de fluide caloporteur. Le fluide caloporteur est ainsi réparti dans une double enveloppe périphérique autour du volume de stockage, cette double enveloppe faisant office de couronne de distribution 80.

L'interface poreuse 53 est une interface annulaire formée tout autour de la périphérie du premier réservoir 51 dans la paroi latérale 70 du premier réservoir 51, les parois supérieure 71 et inférieure 72 étant dépourvue de toute interface poreuse.

Cette interface poreuse 53 marque la séparation entre le volume de stockage et la couronne de distribution 80 faisant ainsi office de diffuseur. Ainsi, dans l'invention, le fluide caloporteur peut être distribué à l'aide d'un milieu poreux annulaire sur la périphérie du réservoir de stockage thermique 51.

De plus, comme visible sur la figure 1, le deuxième réservoir 52 comporte également un premier conduit de distribution 60 de fluide caloporteur dans sa partie supérieure, débouchant dans la couronne de distribution 80 par le biais de la paroi supérieure du deuxième réservoir 52, et un deuxième conduit de distribution 61 de fluide caloporteur dans sa partie inférieure, débouchant dans la couronne de distribution 80 par le biais de la paroi inférieure du deuxième réservoir 52.

On va maintenant décrire, en référence aux figures 2 à 6, les différents modes de fonctionnement possibles pour le dispositif de stockage d'énergie thermique 50 conforme à l'invention.

*Mode en charge ou injection*

La figure 2 illustre la circulation du fluide caloporteur, par le biais des flèches E, lors d'une charge ou injection.

Le fluide caloporteur, plus ou moins chaud, est introduit par le biais du premier conduit 60 du deuxième réservoir 52, fonctionnant alors comme un conduit d'injection, puis est réparti dans la couronne de distribution 80 grâce à la paroi supérieure 71 formant un dôme déflecteur.

Le fluide caloporteur passe ensuite de la couronne de distribution 80 à l'intérieur du premier réservoir 51 comportant le volume de stockage en filtrant à travers l'interface poreuse 53 annulaire. Le fluide caloporteur est alors injecté dans la strate du volume de stockage correspondant à son niveau de température par simple différence de masse volumique.

Par ailleurs, le fluide caloporteur froid, situé en partie inférieure, est soutiré grâce au deuxième conduit 41 du premier réservoir 51, fonctionnant alors comme un conduit de soutirage. Ce deuxième conduit 41 permet alors de prélever le fluide le plus bas, donc le plus froid, dans le volume de stockage sans avoir à passer par la couronne de distribution 80.

*Mode en décharge ou soutirage*

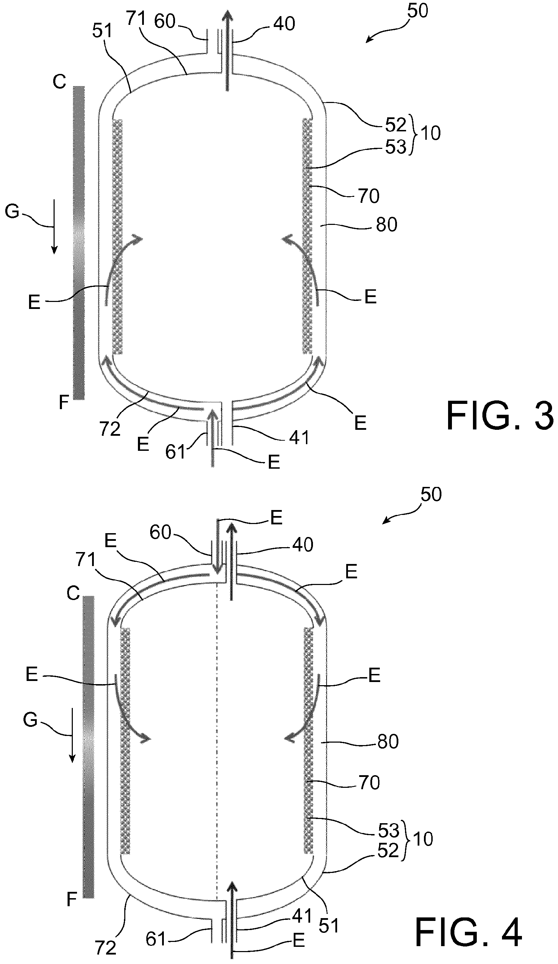

La figure 3 illustre la circulation du fluide caloporteur, par le biais des flèches E, lors d'une décharge ou soutirage.

Le fluide caloporteur, plus ou moins froid, est introduit par le biais du deuxième conduit 61 du deuxième réservoir 52, fonctionnant alors comme un conduit d'injection, puis est réparti dans la couronne de distribution 80 grâce à la paroi inférieure 72 formant un dôme déflecteur.

De même que pour le mode en charge, le fluide caloporteur est injecté par différence de masse volumique dans la strate thermique du volume de stockage du premier réservoir 51 correspondant à son niveau de température.

Le fluide caloporteur chaud, situé dans la partie supérieure du volume de stockage, est directement extrait du premier réservoir 51 par le biais du premier conduit 40, fonctionnant alors comme un conduit de soutirage. Ainsi, ce premier conduit 40 permet de prélever le fluide caloporteur le plus haut placé, et donc le plus chaud, depuis le volume de stockage sans avoir à passer par la couronne de distribution 80.

*Mode en charge/injection et décharge/soutirage simultanées*

La figure 4 illustre un exemple de circulation du fluide caloporteur, par le biais des flèches E, lors d'une charge et décharge simultanées.

Ainsi, le fluide caloporteur, plus ou moins chaud, est introduit par le biais du premier conduit 60 du deuxième réservoir 52, fonctionnant alors comme un conduit d'injection, puis est réparti dans la couronne de distribution 80 pour passer ensuite de la couronne de distribution 80 à l'intérieur du premier réservoir 51 comportant le volume de stockage en filtrant à travers l'interface poreuse 53 annulaire.

En parallèle, du fluide caloporteur, plus ou moins froid, est introduit par le biais du deuxième conduit 41 du premier réservoir 51, fonctionnant alors comme un conduit d'injection, directement dans le volume de stockage, et le fluide caloporteur chaud, situé dans la partie supérieure du volume de stockage, est directement extrait du premier réservoir 51 par le biais du premier conduit 40, fonctionnant alors comme un conduit de soutirage.

Ce mode de fonctionnement permet de charger le premier réservoir 51 lorsque la température fournie par le système de production de chaleur est inférieure à la valeur chaude nominale tout en faisant fonctionner des procédés à température chaude nominale à l'aide du premier réservoir 51 de stockage. Seul un exemple est présenté ici mais il existe plusieurs variantes de configurations possibles pour les charges/décharges simultanées. La seule contrainte tient au fait que les débits d'entrée doivent compenser le débit de sortie.

*Mode en charge/injection nominale forcée et décharge/soutirage nominale forcée*

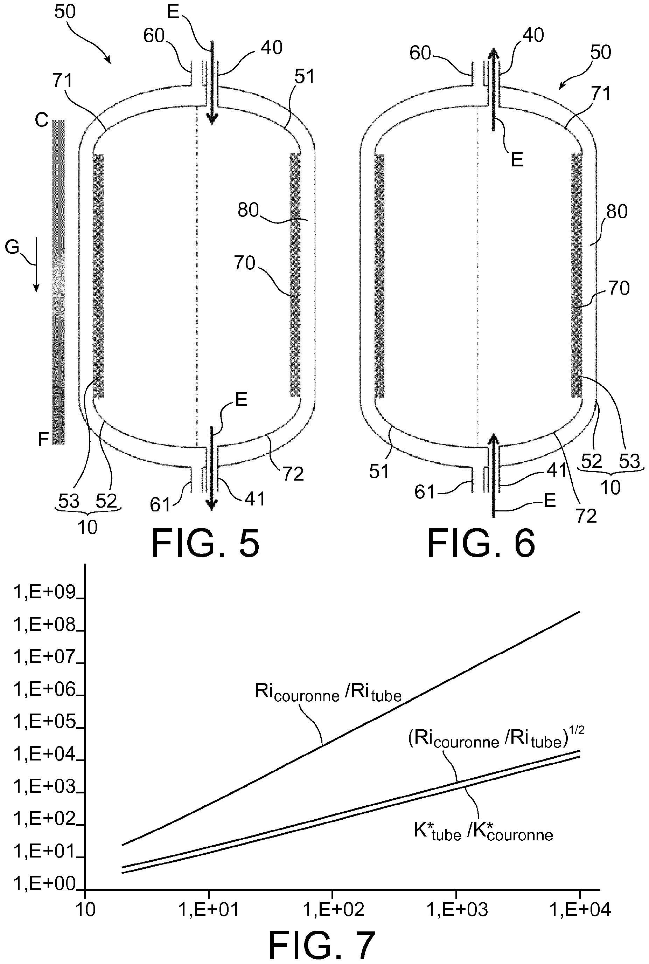

La figure 5 illustre un exemple de circulation du fluide caloporteur, par le biais des flèches E, lors d'une charge, ou injection, nominale forcée, et la figure 6 illustre un exemple de circulation du fluide caloporteur, par le biais des flèches E, lors d'une décharge, ou soutirage, nominale forcée.

Ainsi, en référence à la figure 5, le fluide caloporteur, plus ou moins chaud, est introduit par le biais du premier conduit 40 du premier réservoir 51, fonctionnant alors comme un conduit d'injection. En parallèle, du fluide caloporteur froid, situé dans la partie inférieure du volume de stockage, est directement extrait du premier réservoir 51 par le biais du deuxième conduit 41, fonctionnant alors comme un conduit de soutirage.

En référence à la figure 6, du fluide caloporteur, plus ou moins froid, est introduit par le biais du deuxième conduit 41 du premier réservoir 51, fonctionnant alors comme un conduit d'injection, directement dans le volume de stockage, et du fluide caloporteur chaud, situé dans la partie supérieure du volume de stockage, est directement extrait du premier réservoir 51 par le biais du premier conduit 40, fonctionnant alors comme un conduit de soutirage.

Ces deux modes de fonctionnement permettent d'assurer une charge ou décharge du premier réservoir 51 avec une efficacité optimale lorsque la température d'injection correspond à la température nominale de fonctionnement des utilités.

En effet, même bien dimensionné, un système de distribution poreux est moins efficace qu'une injection simple à faible vitesse lorsque les utilités sont à température nominale.

La charge/décharge nominale forcée suppose qu'il existe un processus d'arbitrage permettant de décider de la procédure de charge/décharge à adopter en fonction de la température de la source chaude et de l'état thermique du réservoir 51. La charge/décharge nominale forcée peut être déclenchée en modifiant la connexion hydraulique du système, par exemple à l'aide de vannes trois voies.

Par rapport à un système de canne poreuse centrale développé dans l'art antérieur, la configuration proposée par l'invention présente plusieurs avantages dont deux principaux.

Premièrement, elle rend possible davantage de modes de fonctionnement, comme la charge/décharge simultanée et la charge/décharge nominale forcée, toutes deux décrites précédemment.

Deuxièmement, elle rend possible l'accroissement de la section de passage du fluide dans le système de distribution. En effet, la canne centrale impose une section de passage relativement réduite qui exige des débits et une perméabilité relativement faibles pour respecter les critères adimensionnels matérialisés par le nombre de Richardson et la perméabilité adimensionnelle tels que décrits dans la partie relative à l'art antérieur et au contexte technique de l'invention.

Comme le montre l'équation (1) présentée auparavant, le gain réalisé sur le nombre de Richardson en passant d'une géométrie tubulaire à une géométrie annulaire périphérique toutes choses égales par ailleurs (débit, longueur du distributeur, température, etc.) peut s'écrire selon l'équation (4) :

$$\frac{Ri_{couronne}}{Ri_{tube}} = \frac{S_{in,couronne}{}^2}{S_{in,tube}{}^2} = \left(\frac{2+\eta}{\eta}\right)^2$$

avec $\eta$ représentant la dimension caractéristique du distributeur (tubulaire ou annulaire) tel que :

$$\eta = \frac{e}{R_i}$$

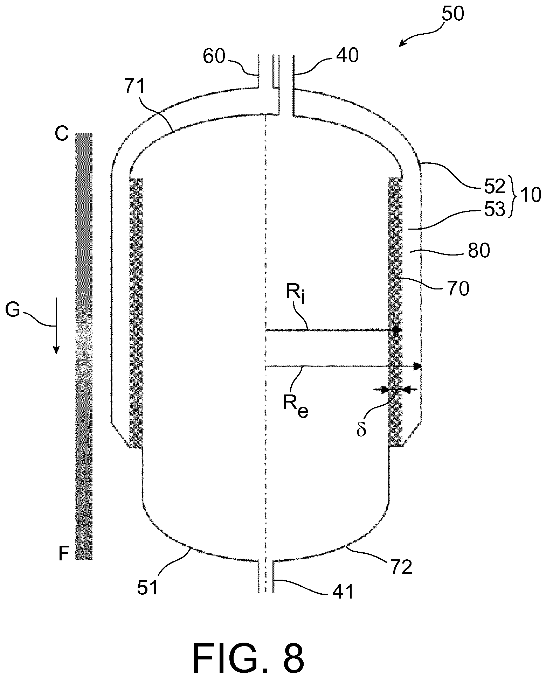

avec $R_i$ (m) représentant le rayon interne de la couronne de distribution 80 (donc à peu de chose près du volume de stockage), comme visible sur les figures 1 et 8, et e (m) représentant le rayon interne de la canne poreuse ou l'épaisseur interne de la couronne de distribution 80, à savoir que $e = R_e - R_i$, $R_e$ étant le rayon externe de la couronne de distribution 80, comme visible sur les figures 1 et 8.

Ainsi, en passant d'une canne poreuse de rayon e à une couronne d'injection de rayon interne $R_i$ et d'épaisseur

e (identique au rayon de la canne poreuse), le gain sur le nombre adimensionnel de Richardson est donné par l'équation (4). Cette équation montre que, dans des conditions de débit et de température équivalentes, le passage d'un distributeur tubulaire à un distributeur annulaire de même dimension caractéristique $\eta$ permet systématiquement d'accroître le nombre de Richardson. La géométrie annulaire permet donc d'accroître le débit $\dot{m}_{in}$ de fluide caloporteur, et donc la puissance de charge ou décharge, tout en conservant un nombre de Richardson élevé, ce qui signifie qu'une injection principalement régie par la force d'Archimède est conservée.

Cependant, si le débit est accru, la perméabilité adimensionnelle s'en trouve également modifiée. Sachant que :

$$\Delta P_{couronne} = \frac{8 \cdot \mu \cdot L_c \cdot \dot{m}_{in}}{\rho_{in} \cdot \pi \cdot (R_e^2 - R_i^2) \cdot \left[R_i^2 + R_e^2 - \frac{R_e^2 - R_i^2}{\ln(R_e/R_i)}\right]}$$

$$D_{H,couronne} = 2 \cdot (R_e - R_i)$$

Si la perméabilité adimensionnelle est réécrite pour une géométrie annulaire à partir de l'équation (3), cela aboutit à l'équation (5) :

$$K^*_{couronne} = \frac{\Delta P_{couronne}}{\Delta P_{poreux}} \cdot \left(\frac{\rho_{in} \cdot u_{sup,poreux} \cdot D_{H,couronne}/2}{\mu}\right)$$

$$= \frac{8 \cdot K \cdot L_c \cdot \dot{m}_{in}}{\pi \cdot \mu \cdot \delta \cdot (R_i + R_e) \cdot \left[R_i^2 + R_e^2 - \frac{R_e^2 - R_i^2}{\ln(R_e/R_i)}\right]}$$

avec $\Delta P_{couronne}$ (Pa) représentant la perte de charge de la couronne de distribution 80, $D_{H,couronne}$ (m) représentant le diamètre hydraulique de la couronne de distribution 80, $R_i$ (m) représentant le rayon interne de la couronne et $R_e$ (m) représentant le rayon externe de la couronne.

Ainsi, si l'on calcule la réduction de perméabilité adimensionnelle en passant d'un tube poreux à une couronne poreuse de même dimension caractéristique grâce aux équations (2) et (5), cela donne :

$$\frac{K^*_{tube}}{K^*_{couronne}} = \frac{(R_i + R_e) \cdot \left[R_i^2 + R_e^2 - \frac{R_e^2 - R_i^2}{\ln(R_e/R_i)}\right]}{e^3}$$

Soit :

$$\frac{K^*_{tube}}{K^*_{couronne}} = \frac{(2 + \eta) \cdot \left[2 + 2 \cdot \eta + \eta^2 - \frac{2 \cdot \eta + \eta^2}{\ln(1 + \eta)}\right]}{\eta^3}$$

Pour toutes les valeurs pertinentes de $\eta$ (c'est-à-dire $\eta > 1$), l'équation ci-dessus donne un résultat supérieur à l'unité, ce qui signifie qu'en remplaçant un tube poreux par une couronne poreuse de même dimension caractéristique $\eta$, la porosité adimensionnelle du distributeur est réduite toutes choses égales par ailleurs. La géométrie annulaire permet donc de conserver une perméabilité adimensionnelle identique (et donc un système de distribution fonctionnel) tout en accroissant le débit ou en augmentant la perméabilité propre du matériau poreux.

L'intérêt de la géométrie annulaire par rapport à la géométrie tubulaire peut être résumé sous forme de graphique. Ainsi, la figure 7 présente Ri$_{couronne}$/Ri$_{tube}$, (Ri$_{couronne}$/Ri$_{tube}$)$^{1/2}$ et K*$_{tube}$/K*$_{couronne}$ en ordonnées en fonction de $1/\eta$ en abscisse. Elle montre les gains réalisés en termes de nombre de Richardson Ri$_{couronne}$/Ri$_{tube}$, et de sa racine carrée afin d'être proportionnel au débit (Ri$_{couronne}$/Ri$_{tube}$)$^{1/2}$ et en termes de perméabilité adimensionnelle K*$_{tube}$/K*$_{couronne}$ lors du passage d'une géométrie tubulaire à une géométrie annulaire de même dimension caractéristique $\eta$ telle que $1/\eta = R_i/e$.

Ce gain peut notamment se traduire par une augmentation du débit. Le graphique montre que le gain est limité par la perméabilité adimensionnelle : si le débit est accru dans la géométrie annulaire de manière à respecter le même nombre de Richardson que dans la géométrie tubulaire de même dimension caractéristique $\eta$ (courbe intermédiaire $(Ri_{couronne}/Ri_{tube})^{1/2}$ car Ri est proportionnel à $\dot{m}_{in}^{-2}$), alors la perméabilité adimensionnelle de la géométrie annulaire est mécaniquement supérieure à celle de la géométrie tubulaire équivalente (courbe $K^*_{tube}/K^*_{couronne}$). Cette affirmation est vraie pour $\eta \gtrsim 10^{-5}$. C'est donc la perméabilité adimensionnelle qui est le critère pertinent permettant de quantifier le gain obtenu par le changement de géométrie.

En effet, la perméabilité adimensionnelle possède une valeur optimale, alors que le nombre de Richardson doit simplement être suffisamment grand (supérieur à 100). C'est donc la perméabilité adimensionnelle qu'il faut chercher à maintenir constante lors du changement de géométrie. Toutes choses égales par ailleurs, le maintien de la perméabilité adimensionnelle par augmentation du débit se traduit mécaniquement par une augmentation du nombre de Richardson (si tant est que $\eta \gtrsim 10^{-5}$), ce qui n'est *a priori* pas préjudiciable au fonctionnement du système.

Il est également possible de conserver une perméabilité adimensionnelle intacte non pas en modifiant le débit, mais en modifiant les caractéristiques de l'interface poreuse 53 (perméabilité propre). Dans les configurations classiques de canne poreuse, les contraintes de dimensionnement conduisent généralement à recourir à des matériaux de faible perméabilité, de type membrane de filtre. Or, ces matériaux s'encrassent et se bouchent facilement, et sont relativement rares et coûteux. Grâce à la géométrie annulaire selon l'invention, il devient possible toutes choses égales par ailleurs de recourir à des matériaux relativement perméables et donc peu coûteux et peu susceptibles de se boucher par encrassement. Il serait par exemple possible de constituer une interface poreuse relativement perméable et peu coûteuse grâce à un lit de billes en plastiques ou tout autre milieu granulaire empaqueté dans un treillis à la manière de gabions.

Par ailleurs, en référence à la figure 8, on a représenté un deuxième exemple de dispositif de stockage d'énergie thermique 50 conforme à l'invention.

Ce deuxième exemple de dispositif de stockage d'énergie thermique 50 est semblable au premier exemple décrit en référence aux figures 1 à 6, hormis le fait que la configuration du deuxième réservoir 52 est modifiée. En particulier, il peut être utilisé selon les différents modes décrits précédemment en référence aux figures 2 à 6.

Ainsi, dans ce deuxième exemple, le premier réservoir interne de stockage thermique 51 est en partie contenu dans le deuxième réservoir externe de distribution de fluide caloporteur 52.

Le deuxième réservoir 52 prend ainsi une forme globalement cylindrique entourant le premier réservoir mais celle-ci est tronquée en partie inférieure du premier réservoir 51 de sorte que la paroi du deuxième réservoir 52 ne délimite un espace formant une couronne de distribution 80 avec la paroi du premier réservoir 51 que dans les parties supérieure et centrale du premier réservoir 51, comme visible sur la figure 8.

Dans la partie inférieure du premier réservoir 51, les parois des deux réservoirs 51 et 52 se rejoignent.

Aussi, le deuxième réservoir 52 comporte un unique conduit de distribution 60 de fluide caloporteur dans sa partie supérieure.

La charge à température variable est une problématique beaucoup plus courante que la décharge à température variable. En effet, la température de charge peut varier en raison d'un apport d'énergie lié à des ressources renouvelables intermittentes, par exemple solaires, tandis que la décharge est le plus souvent liée à des procédés régulés et contrôlés, donc peu susceptibles de renvoyer une température fluctuante. Pour cette raison, le dispositif 50 est adapté pour ne permettre que les charges à température variable, comme visible sur la figure 8.

Ainsi, dans ce cas, la couronne de distribution 80 n'enveloppe pas totalement le volume de stockage mais descend jusqu'à un niveau à définir. Plus la couronne de distribution 80 descend bas, plus il est possible de faire de l'injection stratifiée dans un dispositif déjà fortement chargé, et donc avec une zone de gradient thermique basse.

Réciproquement, bien que non représenté et bien que cela soit moins utile, il est aussi possible d'avoir un dispositif de stockage d'énergie thermique 50 permettant de faire uniquement de l'injection stratifiée en décharge, soit un stockage de fluide caloporteur froid en température variable. Dans ce cas, le deuxième réservoir 52 engloberait la partie inférieure, et éventuellement la partie centrale, du premier réservoir 51 sans englober la partie supérieure. Autrement dit, la couronne de distribution 80 serait uniquement présente sur la partie inférieure du premier réservoir 51. Cela reviendrait à « inverser » le dispositif 50 représenté sur la figure 8.

Par ailleurs, il est à noter que l'interface poreuse peut être formée différemment que par une interface poreuse continue annulaire. Ainsi, il pourrait être possible de ne pas disposer l'interface poreuse sur toute la périphérie du volume de stockage mais seulement sur une partie de celle-ci. En particulier, le système de distribution 10 peut comporter une pluralité d'interfaces poreuses 53, espacées les unes des autres sur tout le pourtour de la paroi du premier réservoir interne de stockage thermique 51, de sorte à définir des fenêtres alternativement poreuses et pleines délimitant le volume de stockage.

Il est à noter que, pour tous les exemples décrits précédemment, l'interface poreuse 53 peut être constituée de tout matériau présentant la perméabilité répondant aux exigences du dimensionnement. De préférence, l'interface poreuse 53 sera choisie parmi les matériaux peu coûteux, thermiquement isolants pour éviter la déstratification thermique du stockage, de faible masse volumique pour ne pas surcharger mécaniquement le réservoir 51, et compatibles avec le fluide caloporteur et les niveaux de température visés. Par exemple, pour un fluide caloporteur sous forme d'eau à relativement faible température, un lit de billes en plastique empaquetées dans un treillis à la manière de gabions peut répondre à ces exigences. C'est alors la taille des billes et du treillis qui permet d'adapter la perméabilité propre du milieu granulaire.

Par ailleurs, les parois supérieure 71 et inférieure 72 du premier réservoir 51, formant des dômes déflecteurs, doivent avantageusement être compatibles avec le fluide caloporteur et thermiquement isolants afin de minimiser l'échange de chaleur entre le volume de stockage et le fluide caloporteur injecté. Ces dômes 71, 72 peuvent par exemple être en métal s'ils sont associés à un isolant thermique ou bien être directement constitués de plastique isolant.

En outre, la couronne de distribution 80, formant la double enveloppe autour du premier réservoir 51, est avantageusement isolée thermiquement de manière à minimiser les échanges de chaleur avec l'extérieur. En effet, le fluide caloporteur injecté et contenant l'énergie utile circule dans cette couronne de distribution 80, laquelle est particulièrement exposée aux pertes de chaleur du fait de sa situation périphérique.

**Revendications**

1. Dispositif de stockage d'énergie thermique (50), comportant:

   - un premier réservoir interne de stockage thermique (51) stratifié comportant un fluide caloporteur pour le stockage d'énergie thermique, et comportant au moins un conduit de distribution (40, 41) de fluide caloporteur, et
   - un système de distribution (10) de fluide caloporteur pour l'injection et/ou le soutirage de fluide caloporteur, comportant :

      - un deuxième réservoir externe de distribution de fluide caloporteur (52) dans lequel est contenu au moins en partie le premier réservoir interne de stockage thermique (51), comportant au moins un conduit de distribution (60, 61) de fluide caloporteur, et
      - au moins une interface poreuse (53) formée dans une partie de la paroi du premier réservoir interne de stockage thermique (51) contenue dans le deuxième réservoir externe de distribution de fluide caloporteur (52), une communication fluidique étant ainsi réalisée entre le premier réservoir interne de stockage thermique (51) et le deuxième réservoir externe de distribution de fluide caloporteur (52) par le biais de ladite au moins une interface poreuse (53) de sorte à permettre la distribution de fluide caloporteur, **caractérise en ce que** le premier réservoir interne de stockage thermique (51) comporte un premier conduit de distribution (40) de fluide caloporteur dans sa partie supérieure et un deuxième conduit de distribution (41) de fluide caloporteur dans sa partie inférieure.

2. Dispositif selon la revendication 1, **caractérisé en ce que** le premier réservoir interne de stockage thermique (51) comporte une paroi latérale (70), une paroi supérieure (71) et une paroi inférieure (72), ladite au moins une interface poreuse (53) étant formée dans la paroi latérale (70), dans une partie contenue dans le deuxième réservoir externe de distribution de fluide caloporteur (52), les parois supérieure (71) et inférieure (72) étant notamment dépourvues de toute interface poreuse.

3. Dispositif selon la revendication 1 ou 2, **caractérisé en ce que** le premier réservoir interne de stockage thermique (51) et le deuxième réservoir externe de distribution de fluide caloporteur (52) présentent une forme cylindrique, ladite au moins une interface poreuse (53) ayant notamment une forme annulaire continue tout autour du premier réservoir interne de stockage thermique (51).

4. Dispositif selon l'une quelconque des revendications précédentes, **caractérisé en ce que** le premier réservoir interne de stockage thermique (51) est intégralement contenu dans le deuxième réservoir externe de distribution de fluide caloporteur (52) de sorte à définir des réservoirs (51, 52) gigognes, l'espace séparant les parois des réservoirs (51, 52) définissant notamment une couronne de distribution (80) de fluide caloporteur.

5. Dispositif selon l'une quelconque des revendications 1 à 4, **caractérisé en ce que** le deuxième réservoir externe de distribution de fluide caloporteur (52) comporte un premier conduit de distribution (60) de fluide caloporteur dans sa partie supérieure et un deuxième conduit de distribution (61) de fluide caloporteur dans sa partie inférieure.

6. Dispositif selon l'une quelconque des revendications 1 à 3, **caractérisé en ce que** le premier réservoir interne de stockage thermique (51) est en partie contenu dans le deuxième réservoir externe de distribution de fluide caloporteur (52), l'espace séparant la paroi de la partie du premier réservoir interne de stockage thermique (51) contenue dans le deuxième réservoir externe de distribution de fluide caloporteur (52) de la paroi du deuxième réservoir externe de distribution de fluide caloporteur (52) définissant notamment une couronne de distribution (80) de fluide caloporteur.

**7.** Dispositif selon la revendication 6, **caractérisé en ce que** le deuxième réservoir externe de distribution de fluide caloporteur (52) comporte un unique conduit de distribution (60) de fluide caloporteur dans sa partie supérieure.

**8.** Dispositif selon l'une quelconque des revendications 2 à 7, **caractérisé en ce que** la paroi supérieure (71) et/ou la paroi inférieure (72) du premier réservoir (51) sont réalisées en métal avec un isolant thermique et/ou en plastique isolant thermiquement.

**9.** Dispositif selon l'une quelconque des revendications précédentes, **caractérisé en ce que** ladite au moins une interface poreuse (53) comporte un lit de billes en plastique empaquetées dans un treillis.

**10.** Dispositif selon l'une quelconque des revendications précédentes, **caractérisé en ce que** le système de distribution (10) de fluide caloporteur comporte une pluralité d'interfaces poreuses (53), espacées les unes des autres sur tout le pourtour de la paroi du premier réservoir interne de stockage thermique (51), définissant ainsi des fenêtres alternativement poreuses et non poreuses.

**11.** Dispositif selon l'une quelconque des revendications précédentes, **caractérisé en ce qu'**il est un dispositif de stockage d'énergie thermique par chaleur sensible.

**12.** Procédé de distribution de fluide caloporteur, **caractérisé en ce qu'**il est mis en œuvre au moyen d'un dispositif de stockage d'énergie thermique (50) selon l'une quelconque des revendications précédentes, et en qu'il comporte l'étape consistant à injecter un fluide caloporteur dans une strate thermique du premier réservoir interne de stockage thermique (51) de même température que le fluide caloporteur par le biais du système de distribution (10), notamment par le biais de ladite au moins une interface poreuse (53) formant un élément diffuseur de fluide caloporteur et/ou l'étape consistant à soutirer directement un fluide caloporteur depuis le premier réservoir interne de stockage thermique (51) sans utilisation du système de distribution (10), notamment de ladite au moins une interface poreuse (53).

**Patentansprüche**

**1.** Vorrichtung zum Speichern von Wärmeenergie (50), enthaltend:

- einen geschichteten, inneren ersten Behälter (51) zur Wärmespeicherung, der ein Wärmeträgerfluid zur Speicherung von Wärmeenergie enthält und mindestens eine Verteilungsleitung (40, 41) für das Wärmeträgerfluid aufweist, und
- ein Wärmeträgerfluid-Verteilungssystem (10) zum Einleiten und/oder Ausleiten von Wärmeträgerfluid, enthaltend:
- einen äußeren zweiten Behälter (52) zur Verteilung von Wärmeträgerfluid, in dem der innere erste Wärmespeicherbehälter (51) zumindest teilweise enthalten ist, mit mindestens einer Wärmeträgerfluid-Verteilungsleitung (60, 61), und
- mindestens eine poröse Schnittstelle (53), die in einem Abschnitt der Wand des inneren ersten Wärmespeicherbehälters (51) ausgebildet ist, der in dem äußeren zweiten Verteilerbehälter (52) für Wärmeträgerfluid enthalten ist, wobei somit eine Strömungsverbindung zwischen dem inneren ersten Wärmespeicherbehälter (51) und dem äußeren zweiten Verteilerbehälter (52) für Wärmeträgerfluid über die mindestens eine poröse Schnittstelle (53) hergestellt ist, um die Verteilung des Wärmeträgerfluids zu ermöglichen, **dadurch gekennzeichnet, dass**

der innere erste Wärmespeicherbehälter (51) in seinem oberen Abschnitt eine erste Wärmeträgerfluid-Verteilungsleitung (40) und in seinem unteren Abschnitt eine zweite Wärmeträgerfluid-Verteilungsleitung (41) aufweist.

**2.** Vorrichtung nach Anspruch 1, **dadurch gekennzeichnet, dass** der innere erste Wärmespeicherbehälter (51) eine Seitenwand (70), eine obere Wand (71) und eine untere Wand (72) aufweist, wobei die mindestens eine poröse Schnittstelle (53) in der Seitenwand (70) in einem Abschnitt ausgebildet ist, der in dem äußeren zweiten Verteilerbehälter (52) für Wärmeträgerfluid enthalten ist, wobei die obere Wand (71) und die untere Wand (72) insbesondere frei von jeder porösen Schnittstelle sind.

**3.** Vorrichtung nach Anspruch 1 oder 2, **dadurch gekennzeichnet, dass** der innere erste Wärmespeicherbehälter (51) und der äußere zweite Verteilerbehälter (52) für Wärmeträgerfluid eine zylindrische Form aufweisen, wobei die mindestens eine poröse Schnittstelle (53) insbesondere eine durchgehende Ringform um den inneren ersten Wärmespeicherbehälter (51) herum aufweist.

**4.** Vorrichtung nach einem der vorhergehenden Ansprüche, **dadurch gekennzeichnet, dass** der innere erste Wärmespeicherbehälter (51) in dem äußeren zweiten Verteilerbehälter (52) für Wärmeträgerfluid integral enthalten ist, so dass ineinanderpassende Behälter (51, 52) definiert werden, wobei der Raum, der die Wände der Behälter (51, 52) trennt, insbesondere einen Wärmeträgerfluid-Verteilungsring (80) definiert.

**5.** Vorrichtung nach einem der Ansprüche 1 bis 4, **dadurch gekennzeichnet, dass** der äußere zweite Verteilerbehälter (52) für Wärmeträgerfluid in seinem oberen Abschnitt eine erste Verteilungsleitung (60) für Wärmeträgerfluid und in seinem unteren Abschnitt eine zweite Verteilungsleitung (61) für Wärmeträgerfluid aufweist.

**6.** Vorrichtung nach einem der Ansprüche 1 bis 3, **dadurch gekennzeichnet, dass** der innere erste Wärmespeicherbehälter (51) teilweise in dem äußeren zweiten Verteilerbehälter (52) für Wärmeträgerfluid enthalten ist, wobei der Raum, der die Wand des in dem äußeren zweiten Verteilerbehälter (52) für Wärmeträgerfluid enthaltenen Abschnitts des inneren ersten Wärmespeicherbehälters (51) von der Wand des äußeren zweiten Verteilerbehälters (52) für Wärmeträgerfluid trennt, insbesondere einen Wärmeträgerfluid-Verteilungsring (80) definiert.

**7.** Vorrichtung nach Anspruch 6, **dadurch gekennzeichnet, dass** der äußere zweite Verteilerbehälter (52) für Wärmeträgerfluid in seinem oberen Abschnitt eine einzige Verteilungsleitung (60) für Wärmeträgerfluid aufweist.

**8.** Vorrichtung nach einem der Ansprüche 2 bis 7, **dadurch gekennzeichnet, dass** die obere Wand (71) und/oder die untere Wand (72) des ersten Behälters (51) aus Metall mit einem thermischen Isolator und/oder aus thermisch isolierendem Kunststoff hergestellt sind.

**9.** Vorrichtung nach einem der vorhergehenden Ansprüche, **dadurch gekennzeichnet, dass** die mindestens eine poröse Schnittstelle (53) ein Bett aus Kunststoffkugeln aufweist, die in einem Gitter eingepackt sind.

**10.** Vorrichtung nach einem der vorhergehenden Ansprüche, **dadurch gekennzeichnet, dass** das Verteilungssystem (10) für Wärmeträgerfluid eine Vielzahl von porösen Schnittstellen (53) aufweist, die um den gesamten Umfang der Wand des inneren ersten Wärmespeicherbehälters (51) herum voneinander beabstandet sind und so abwechselnd poröse und nicht poröse Fenster definieren.

**11.** Vorrichtung nach einem der vorhergehenden Ansprüche, **dadurch gekennzeichnet, dass** es sich um eine Vorrichtung zur Speicherung von Wärmeenergie durch fühlbare Wärme handelt.

**12.** Verfahren zur Verteilung von Wärmeträgerfluid, **dadurch gekennzeichnet, dass** es mittels einer Vorrichtung (50) zur Speicherung von Wärmeenergie nach einem der vorhergehenden Ansprüche durchgeführt wird und dass es den Schritt umfasst, der darin besteht, ein Wärmeträgerfluid in eine thermische Schicht des inneren ersten Wärmespeicherbehälters (51) mit der gleichen Temperatur wie das Wärmeträgerfluid über das Verteilungssystem (10) einzuleiten, insbesondere über die mindestens eine poröse Schnittstelle (53), die ein Diffusorelement für Wärmeträgerfluid bildet, und/oder den Schritt, der darin besteht, ein Wärmeträgerfluid direkt aus dem inneren ersten Wärmespeicherbehälter (51) auszuleiten, ohne das Verteilungssystem (10), insbesondere die mindestens eine poröse Schnittstelle (53), zu verwenden.

**Claims**

**1.** A device for storing thermal energy (50), including:

- a first internal stratified thermal storage tank (51) including a coolant for storing thermal energy, and including at least one coolant distribution conduit (40, 41), and
- a coolant distribution system (10) for the injection and/or the bleeding of coolant, including:

- a second external coolant distribution tank (52) in which the first internal thermal storage tank (51) is at least partially contained, including at least one coolant distribution conduit (60, 61), and

- at least one porous interface (53) formed in a portion of the wall of the first internal thermal storage tank (51) contained in the second external coolant distribution tank (52), a fluid communication thus being made between the first internal thermal storage tank (51) and the second external coolant distribution tank (52) through said at least one porous interface (53) so as to allow the coolant distribution,

**characterised in that** the first internal thermal storage tank (51) includes a first coolant distribution conduit (40) in the upper portion thereof and a second coolant distribution conduit (41) in the lower portion thereof.

2. The device according to claim 1, **characterised in that** the first internal thermal storage tank (51) includes a lateral wall (70), an upper wall (71) and a lower wall (72), said at least one porous interface (53) being formed in the lateral wall (70), in a portion contained in the second external coolant distribution tank (52), the upper (71) and lower (72) walls being in particular devoid of any porous interface.

3. The device according to claim 1 or 2, **characterised in that** the first internal thermal storage tank (S1) and the second external coolant distribution tank (52) have a cylindrical shape, said at least one porous interface (53) having in particular a continuous annular shape all around the first internal thermal storage tank (51).

4. The device according to any one of the preceding claims, **characterised in that** the first internal thermal storage tank (51) is completely contained in the second external coolant distribution tank (52) so as to define nesting tanks (51, 52), the space separating the walls of the tanks (51, 52) defining in particular a coolant distribution ring (80).

5. The device according to any one of claims 1 to 4, **characterised in that** the second external coolant distribution tank (52) includes a first coolant distribution conduit (60) in the upper portion thereof and a second coolant distribution conduit (61) in the lower portion thereof.

6. The device according to any one of claims 1 to 3, **characterised in that** the first internal thermal storage tank (51) is partially contained in the second external coolant distribution tank (52), the space separating the wall of the portion of the first internal thermal storage tank (51) which is contained in the second external coolant distribution tank (52) of the wall of the second external coolant distribution tank (52) defining in particular a coolant distribution ring (80).

7. The device according to claim 6, **characterised in that** the second external coolant distribution tank (52) includes a single coolant distribution conduit (60) in the upper portion thereof.

8. The device according to any one of claims 2 to 7, **characterised in that** the upper wall (71) and/or the lower wall (72) of the first tank (51) are made of metal with a thermal insulator and/or of a thermally insulating plastic.

9. The device according to any one of the preceding claims, **characterised in that** said at least one porous interface (53) includes a bed of plastic balls packaged in a lattice.

10. The device according to any one of the preceding claims, **characterised in that** the coolant distribution system (10) includes a plurality of porous interfaces (53), spaced from each other over the entire periphery of the wall of the first internal thermal storage tank (51), thus defining alternately porous and non-porous windows.

11. The device according to any one of the preceding claims, **characterised in that** it is a device for storing thermal energy by sensible heat.

12. A coolant distribution method, **characterised in that** it is implemented by means of a device for storing thermal energy (50) according to any one of the preceding claims, and **in that** it includes the step consisting in injecting a coolant into a thermal stratum of the first internal thermal storage tank (51) of the same temperature as the coolant through the distribution system (10), in particular through said at least one porous interface (53) forming a coolant diffuser element and/or the step consisting in directly bleeding a coolant from the first internal thermal storage tank (51) without using the distribution system (10), in particular of said at least one porous interface (53).

FIG. 1

FIG. 2

FIG. 3

FIG. 4

FIG. 5    FIG. 6

FIG. 7

FIG. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3026385 A1
- WO 2016146724 A1
- EP 2065666 A1
- KR 20050064018 A
- WO 2013083911 A1
- US 8261774 B2

**Littérature non-brevet citée dans la description**

- **S. WANG ; J.H. DAVIDSON.** Selection of permeability for optimum performance of a porous tube thermal stratification manifold. *Solar Energy,* Décembre 2015, vol. 122, 472-485